# EUROPEAN PATENT SPECIFICATION

(11) **EP 3 330 148 B1**
(45) Date of publication and mention of the grant of the patent: **14.10.2020**
(21) Application number: 16830238.8
(22) Date of filing: 04.07.2016
(51) Int. Cl.: B60W 40/08, B60K 35/00, B60W 30/00, B60W 50/14, G08G 1/16, B60K 37/06, B60W 40/04, B60W 40/06, B60W 40/10, B60W 50/08, B60W 50/12, B60W 40/02

(54) **AUTOMATIC DRIVING SYSTEM FOR VEHICLES**
AUTOMATISCHES ANTRIEBSSYSTEM FÜR FAHRZEUGE
SYSTÈME DE CONDUITE AUTOMATIQUE POUR VÉHICULES

(30) Priority: 29.07.2015 JP 2015149501
(43) Date of publication of application: 06.06.2018
(73) Proprietor: Tayama, Shuichi, Tokyo 167-0031 (JP); Image Co., Ltd., Tokyo 104-0041 (JP)
(72) Inventor: TAYAMA, Shuichi, Tokyo, 167-0031 (JP)
(74) Representative: Dr. Gassner & Partner mbB
(86) International application number: PCT/JP2016/069805
(87) International publication number: WO 2017/018133

(56) References cited:
- JP-A- H1 191 397
- JP-A- H1 191 397
- JP-A- H09 156 398
- JP-A- H09 222 922
- JP-A- H10 309 961
- JP-A- 2000 276 690
- JP-A- 2000 276 690
- JP-A- 2008 120 271
- JP-A- 2009 274 482
- JP-A- 2011 118 603
- JP-A- 2011 131 838
- US-A- 5 906 645

## Description

### TECHNICAL FIELD

The present invention relates to an automatic driving system for vehicles such as automobiles, and in particular, relates to a technology to switch drive mode from automatic driving to manual driving.

### BACKGROUND ART

A conventional automatic driving system is disclosed in JP 2000 276690 A. This document refers to an automatic operation control apparatus which is configured to switch from an automatic operation mode to a manual operation mode based on the information from various sensors.

Recently, there have been developed and proposed a variety of technologies for automatic driving of a vehicle such as an automobile as controlling speed and steering of the vehicle without manual operation of a driver. In general, it is possible to appropriately perform switching between an automatic drive mode and a manual drive mode. Here, when such switching is performed suddenly from automatic driving to manual driving during travelling, there is a fear that the driver is not sufficiently ready for manual driving.

In view of the above, there has been proposed an automatic driving control apparatus for a vehicle that allows switching to manual driving only when the vehicle travelling with automatic driving is in a stable state (e.g., see Patent Literature 1). Here, the stable state represents a case in which a vehicle is travelling on a straight road with a steering angle being in a neutral state and an unstable state represents a case in which desired travelling cannot be maintained without any positive correcting operation (steering operation, accelerating operation, braking operation, or the like). In the unstable state, the apparatus prohibits switching to manual driving.

Further, there has been known an automatic driving apparatus that detects steering override caused by steering operation of a driver during switching from an automatic driving travel mode to a manual driving travel mode and, based on the detection result, enables to easily detect drive recognition of the driver (e.g., see Patent Literature 2). When any steering override by the driver is not detected, the vehicle is guided to a safe position while maintaining the automatic drive mode.

Further, there has been known a travel state indicating apparatus that displays on a screen a travel state during automatic driving for helping a driver be prepared and ready for manual driving even when an automatic drive mode cannot be maintained due to external factors independently of intention of the driver (e.g., see Patent Literature 3). For helping the driver easily determine in advance possibility of switching to manual driving, stability of automatic drive control is displayed by an image resembling a steering wheel. Here, inclination and display area of the steering wheel are configured to be varied in accordance with a state of an own vehicle and environment information therearound.

In contrast, there has been proposed an automatic driving vehicle control apparatus that enables automatic switching to automatic driving again after switching is performed from automatic driving to manual driving due to override (driving operation) of a driver (see Patent Literature 4). With the apparatus, to prevent the driver from being provided with a feeling of strangeness at the time of automatic switching, switching from manual driving to automatic driving is performed in the case that the difference between an actual travel course with manual driving and a target travel course with automatic driving is less than a threshold value and override of the driver is not detected.

Further, there has been known a vehicle drive supporting apparatus that performs appropriate drive supporting in accordance with a state of a driver. Examples of the above include to recognize physical and/or mental states of a driver by detecting biometric information (breathing, heartbeat, and the like) and to determine a degree of mental disturbance of the driver based on variation of breathing of the driver and variation of driving operation (see Patent Literature 5). Breathing of the driver is measured based on variation of body pressure of the driver detected by a pressure-sensitive sensor arranged at a driver's seat.

Further, there has been known to detect a degree of sleepiness (a degree of arousal) and a degree of fatigue of a driver based on posture variation during driving, blinking, and a pupil diameter (see Patent Literature 6). The posture variation of the driver can be determined by detecting distribution and/or barycenter of seat face pressure with a body pressure sensor arranged at a seat face of a driver's seat.

Further, there has been proposed an apparatus to analyze a face image of a driver captured by a vehicle-mounted camera for determining a drive state such as a degree of arousal, a degree of carelessness, and the like of the driver (e.g., Patent Literature 7). The apparatus detects a degree of eye-opening (i.e., eye opening degree) and an eye behavior (an eye position, speed and frequency of blinking, and the like) by processing the postured face image and determines a state of the driver.

### CITED LITERATURE

### PATENT LITERATURE

Patent Literature 1: Japanese Patent Application Laid-Open No. H9-222922
Patent Literature 2: Japanese Patent Application Laid-Open No. 2000-276690
Patent Literature 3: Japanese Patent Application Laid-Open No. 2001-199295
Patent Literature 4: Japanese Patent Application Laid-Open No. 2012-51441
Patent Literature 5: Japanese Patent Application Laid-Open No. 2006-42903
Patent Literature 6: Japanese Patent Application Laid-Open No. 2002-8159
Patent Literature 7: Japanese Patent Application Laid-Open No. 2015-118287

### SUMMARY OF THE INVENTION

In automatic driving control of a vehicle, switching from an automatic drive mode to a manual drive mode is performed generally in two cases. One is a case that the switching is to be performed positively and intentionally by a driver. Examples of the above include a case that the driver desires to travel on a route that is different from a travel route set with automatic driving or to travel at a different speed from a set speed, and a case that the driver simply desires to drive by himself/herself.

The other is a case that the automatic driving system determines that maintaining the automatic drive mode is difficult or inadequate for some reason during automatic driving. Examples of the reason include a case that environments and road situations around the own vehicle or traffic situations are varied during automatic driving and the automatic driving system determines that maintaining automatic driving is not suitable therefor or causes unavoidable danger to be expected.

In either case, it is important, for smooth and safe shifting from the automatic drive mode to the manual drive mode, that both a travel behavior of the vehicle and a state of the driver are ready for switching of the drive mode. Here, the travel behavior of the vehicle represents steering operation of a steering system, accelerating operation of an accelerating system, and braking operation of a braking system. The state of the driver (hereinafter, called a driver's state) represents mental, psychological, and/or physical states.

In order to solve the abovementioned issues in related art, an object of the present invention is to provide an automatic driving system for vehicles and a method therefor to support safe travelling of vehicles until shifting to manual driving is completely performed during switching from an automatic drive mode to a manual drive mode in automatic driving of vehicles such as an automobile.

Further, an object of the present invention is to provide an automatic driving system for vehicles and a method therefor to determine that manual driving is reliably started by a driver at the time of switching from the automatic drive mode to the manual drive mode in automatic driving of vehicles such as an automobile.

The present invention provides an automatic driving system for vehicles with the features of claim 1. The inventive system is capable of switching between an automatic drive mode in which an own vehicle is caused to travel with automatic driving in accordance with a scheduled travel behavior along a scheduled travel route set in advance and a manual drive mode in which a driver performs driving manually. The automatic driving system includes a driver's state determining unit configured to determine whether or not a state of the driver is a state of being capable of performing manual driving, a travel behavior determining unit configured to determine whether or not a travel behavior of the own vehicle during automatic driving is in a stable state of being switchable to manual driving, and a drive mode switching control unit configured to control switching from the automatic drive mode during automatic driving to the manual drive mode. Here, the driver's state determining unit determines the state of the driver based on an arousal state of the driver and readiness for manual driving of the driver. The travel behavior determining unit determines the travel behavior of the own vehicle based on an operational state of a steering system, an accelerating system, and/or a braking system of the own vehicle during automatic driving. The drive mode switching control unit allows switching from the automatic drive mode to the manual drive mode when the driver's state determining unit determines that the state of the driver is in a state of being capable of performing manual driving and the travel behavior determining unit determines that the travel behavior of the own vehicle is in a stable state of being switchable to manual driving.

As described above, since the state of the driver is determined based on the arousal state of the driver and the readiness for manual driving of the driver and the travel behavior of the own vehicle is determined based on the operational state of the steering system, the accelerating system, and/or the braking system, switching from the automatic drive mode to the manual drive mode can be safely performed.

According to the invention, the drive mode switching control unit provides a notification to encourage the driver to confirm readiness using a display device and/or a speaker of the own vehicle when the driver's state determining unit determines that the driver is in the arousal state but is not ready for manual driving, and then, the driver's state determining unit determines readiness of the driver again. Accordingly, shifting to the manual drive mode can be performed promptly and reliably after starting of determination by the driver's state determining unit or the travel behavior determining unit.

In another embodiment, the drive mode switching control unit maintains the automatic drive mode from starting of the determining by the driver's state determining unit or the travel behavior determining unit until switching to the manual drive mode is allowed. Accordingly, safe travelling of the vehicle can be ensured.

In another embodiment, the driver's state determining unit determines the arousal state of the driver based on biometric information of the driver. Accordingly, it is possible to prevent a risk of shifting to manual driving by own determination even though the driver is not in a state of being capable of performing manual driving.

In another embodiment, the drive mode switching control unit cancels switching from the automatic drive mode to the manual drive mode after a specific period of time has passed from starting of the determining by the travel behavior determining unit. Accordingly, countermeasures for safe travelling can be taken without wasting time even in a case with immediate danger.

In another embodiment, the driver's state determining unit determines that the driver is ready for manual driving when detecting that the driver is in a state of being capable of performing operation of a steering wheel, an accelerator, or a brake of the own vehicle based on input signals from pressure-sensitive sensors arranged at the steering wheel, the accelerator, and the brake. Accordingly, it is possible to ensure safe travelling and prompt shifting to manual driving.

According to another aspect of the present invention, the present invention provides an automatic driving method with the features of claim 7 for vehicles with an automatic driving system for vehicles capable of switching between an automatic drive mode in which an own vehicle is caused to travel with automatic driving in accordance with a scheduled travel behavior along a scheduled travel route set in advance and a manual drive mode in which a driver performs driving manually. The automatic driving method includes determining whether or not a state of the driver is a state of being capable of performing manual driving based on an arousal state of the driver and readiness for manual driving of the driver; determining whether or not a travel behavior of the own vehicle during automatic driving is in a stable state of being switchable to manual driving based on an operational state of a steering system, an accelerating system, and/or a braking system of the own vehicle; and switching to the manual drive mode as releasing the automatic drive mode when the determined state of the driver is in a state of being capable of performing manual driving and the determined travel behavior of the own vehicle is in a stable state of being switchable to manual driving.

As described above, since switching from the automatic drive mode to the manual drive mode is performed based on both the state of the driver that is determined from the arousal state of the driver and the readiness for manual driving of the driver and the travel behavior of the own vehicle that is determined from the operational state of the steering system, the accelerating system, and/or the braking system, it is possible to ensure safe travelling of the vehicle.

According to the invention, the determining of whether or not the driver is ready for manual driving is performed after the state of the driver is determined as a state of being capable of performing manual driving, and the method further includes providing a notification to encourage the driver to confirm readiness using a display device and/or a speaker of the own vehicle after the driver is determined as being not ready for manual driving. Thus, processes from determining of the arousal state of the driver and the readiness for manual driving of the driver to allowing of switching to the manual drive mode are performed in stages. Accordingly, since switching from automatic driving to manual driving is not performed suddenly, it is possible to reduce feeling of tension and burden of the driver by providing the driver temporal and mental comfort for shifting to manual driving.

In another embodiment, the automatic drive mode is maintained from starting of the determining of the state of the driver or the determining of the travel behavior of the own vehicle until completion of the allowing switching to the manual drive mode. Accordingly, safe travelling of the vehicle can be ensured until shifting to manual driving is completely performed.

In another embodiment, the method further includes obtaining biometric information of the driver, and the arousal state of the driver is determined based on the biometric information of the driver. Accordingly, it is possible to prevent a risk of shifting to manual driving by own determination even though the driver is not in a state of being capable of performing manual driving.

In another embodiment, the method further includes measuring elapsed time from starting of the determining of the travel behavior of the own vehicle, and switching from the automatic drive mode to the manual drive mode is cancelled when the elapsed time exceeds a specific time period. Accordingly, countermeasures for safe travelling can be taken without wasting time.

In another embodiment, in the determining of the state of the driver, it is determined that the driver is ready for manual driving when the driver is in state of being capable of performing operation of a steering wheel, an accelerator, or a brake. Accordingly, it is possible to ensure prompt shifting to manual driving while ensuring safe travelling of the vehicle.

### BRIEF DESCRIPTION OF THE DRAWINGS

FIG. 1 is a block diagram illustrating an entire configuration of an automatic driving system for vehicles of a preferable embodiment of the present invention.
FIG. 2 is a plane view illustrating an example of cameras and sensors for automatic driving arranged in an own vehicle.
FIG. 3 is a schematic view of a cabin of an automobile on which the automatic driving system of the present embodiment is mounted as viewing from a driver's seat.
FIG. 4 is a flowchart illustrating switching control from an automatic drive mode to a manual drive mode.
FIG. 5 is a flowchart illustrating a process to determine a state of a driver.
FIG. 6 is a flowchart illustrating a process to determine a travel behavior of a vehicle.

### EMBODIMENTS OF THE INVENTION

Recently, research and development of automatic driving systems have been in progress for further improving safety of road traffic. With such an automatic driving system, an automobile automatically travels while recognizing circumstances therearound. In Japan, automation degree of automatic driving systems for vehicles such as automobiles is defined as being classified into four levels, from Level 1 to Level 4. Level 1 is called a safe driving assisting system with which any of accelerating, steering, and braking is performed by an automobile. Level 2 is called a quasi-automatic-driving system with which a plurality of operations among accelerating, steering, and braking is performed by an automobile. Level 3 is also called a quasi-automatic-driving system with which all of accelerating, steering, and braking are performed by an automobile while those are performed by a driver only in a case of emergency. Level 4 is called a completely automatic driving system with which all of accelerating, steering, and braking are performed something other than a driver completely without involvement of the driver. Here, an automatic driving system represents Level 2 through Level 4 ("strategic innovation program (SIP) automatic driving system research and development plan", November 13, 2014, Cabinet Office, Director-General for Policy Planning, Science Technology and Innovation Department). Unless otherwise specified, the term of automatic driving is defined basically to include automatic driving at all automation degrees, Level 1 to Level 4.

In the following, preferable embodiments of an automatic driving system for vehicles according to the present invention will be described in detail with reference to attached drawings. In the present embodiment, automatic driving denotes automatic driving at Level 3. Further, in the attached drawings, the same or similar reference is given to the same or similar structural element.

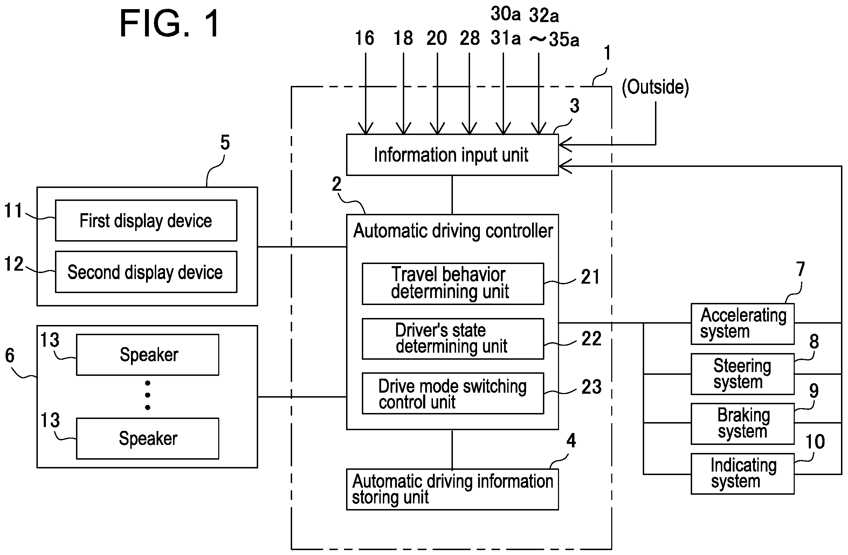

FIG. 1 schematically illustrates an entire configuration of an automatic driving system 1 of the present embodiment. The automatic driving system 1 includes an automatic driving controller 2, an information input unit 3, and an automatic driving information storing unit 4. The automatic driving controller 2 includes a travel behavior determining unit 21, a driver's state determining unit 22, and a drive mode switching control unit 23. The automatic driving controller 2 is connected to an image display system 5 and a stereo audio system 6 that are to be used in combination with the automatic driving system 1. Further, the automatic driving controller 2 is connected to an accelerating system 7, a steering system 8, a braking system 9, an indicating system 10, a fuel system (not illustrated), and an electric system (not illustrated) such as a battery.

The image display system 5 includes a first display device 11 that uses a front windshield of an automobile as a display screen, a second display device 12 being a monitor device mounted on or in a dashboard of the automobile, and a display control unit (not illustrated). The stereo audio system 6 is a surround type including a plurality of speakers 13 arranged in a cabin and an audio control unit (not illustrated).

In general, the accelerating system 7 performs a function to start moving of an automobile as increasing revolution of an engine and shifting gears and to increase or maintain speed of the automobile. The steering system 8 performs a function to operate a steering wheel of an automobile. The braking system 9 performs a function to decrease speed or stop moving of an automobile as decreasing revolution of an engine and shifting gears. The indicating system 10 performs a function to turn on or turn off direction indicators, parking lamps, hazard flashers, head lamps, tail lamps, backing lamps, and the like of an automobile.

To obtain own vehicle information such as a position, a travel state, and the like of an own vehicle, the information input unit 3 is connected with a various kinds of sensors, communication equipment for communication with the outside, and the like mounted on an own vehicle. For example, to accurately ascertain a position of the own vehicle, the information input unit 3 can receive, from a global positioning system (GPS), signals and image data transmitted from a satellite orbiting the earth or receive information through road-to-vehicle communication with an antenna or a communication chip mounted on a road.

Further, the information input unit 3 can obtain information regarding a travel state of the own vehicle from a shift position sensor arranged at the steering system 8 of the own vehicle, a revolution sensor of an engine arranged at the accelerating system 7, a brake sensor arranged at the braking system 9, a speed sensor arranged at wheels, and the like. Further, the information input unit 3 can obtain information regarding states of a driver from cameras and various kinds of sensors arranged in the cabin. Further, the information input unit 3 can receive input directly or indirectly from a driver or another occupant.

Further, to obtain information regarding traffic situations around the own vehicle, the information input unit 3 is connected with cameras, various kinds of sensors, communication equipment for communication with the outside, and the like mounted on the own vehicle. For example, the information input unit 3 can obtain a position, a route, and a travel state of another vehicle through vehicle-to-vehicle communication with the other vehicle travelling, parking, or stopping around the own vehicle and can obtain latest traffic information regarding travel situations of other vehicles, road situations, and the like, through road-to-vehicle communication between an antenna or a communication chip on a road and/or radio communication with a traffic information center via the internet or public broadcasting.

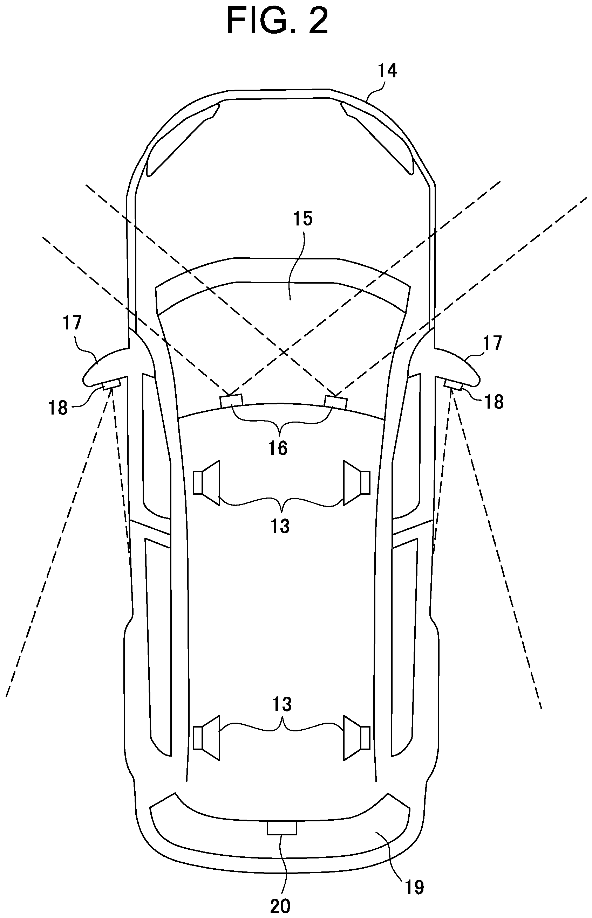

As illustrated in FIG. 2, it is possible to arrange a right-left pair of front cameras 16, 16 at a front windshield 15 to recognize an object at each of the center, right, and left in front of an automobile 14, and to arrange a right-left pair of rear cameras 18, 18 at lower sections of right-left door mirrors 17, 17 to recognize an object at the lateral rear. In another embodiment, it is also possible to arrange an all-direction camera system by adding another camera to the cameras described above.

Further, as illustrated in FIG. 2, to perform detection straight behind the automobile 14, a radar sensor 20, for example, being a millimeter-wave radar sensor, a micrometer-wave radar sensor, a laser radar sensor, an infrared radiation sensor, an ultrasonic sensor, or the like is arranged at the center of an upper section of a rear windshield 19. Further, to support detection at night or in rough weather such as dense fog and heavy rain, a radar sensor similar to the above may be arranged at a front center (e.g., at a radiator frame or under a hood) of the automobile 14. In another embodiment, a center rear camera may be arranged at the rear center of the automobile 14 instead of or in addition to the radar sensor 20.

Further, in FIG. 2, speakers 13 of the stereo audio system 6 are arranged in the cabin each at the right and left of the front and rear, four in total. The number and location of the speakers 13 can be varied variously.

Road map information is stored in advance in the automatic driving information storing unit 4, the road map information being necessary for selecting a travel route to a destination or changing the travel route if required and being necessary for travelling with automatic driving along the determined travel route, such as road maps, lane information, and traffic rules such as regulation speeds and traffic signs. Further, a reference data file including data of images or shape features of various objects may be stored in the automatic driving information storing unit 4, the reference data file being used for detecting and recognizing, as objects, vehicles such as automobiles and pedestrians existing around the own vehicle from the information obtained by the information input unit 3.

The automatic driving controller 2 is structured with a microcomputer that includes a CPU, a ROM, and a RAM. The CPU executes a program stored in the ROM for performing automatic driving of an automobile. When a destination is input by a driver or another occupant before starting automatic driving, the automatic driving controller 2 computes a travel route to the destination and proposes one or more candidates of the travel route. When an occupant confirms and selects one of the proposed travel routes, the automatic driving controller 2 controls the accelerating system 7, the steering system 8, the braking system 9, and the indicating system 10 in accordance with the travel route, and automatic driving is started.

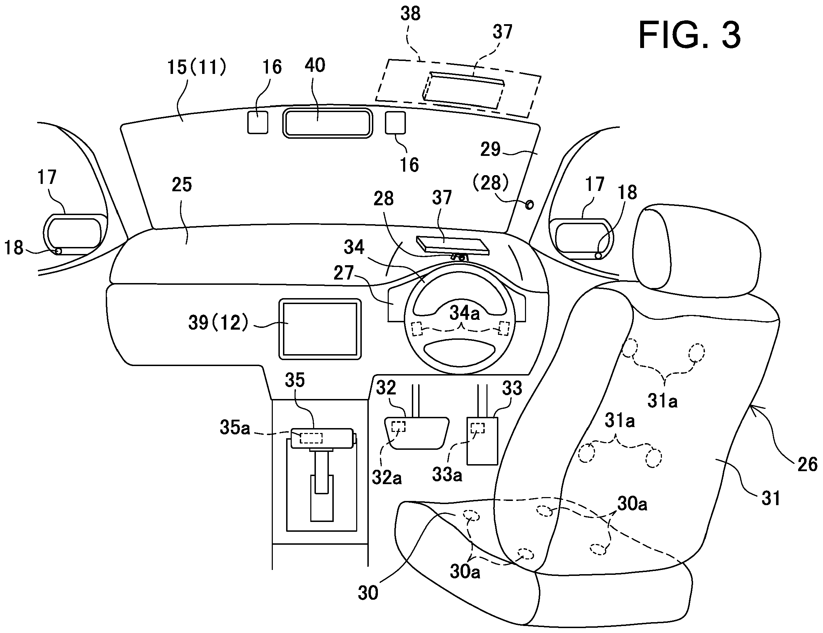

FIG. 3 is a schematic view of a dashboard 25, a driver's seat 26, and surroundings thereof in the automobile 14 on which the automatic driving system 1 is mounted. A face image camera 28 is attached to the dashboard 25 just above an instrument panel 27 in front of the driver's seat 26. It is also possible that the face image camera 28 is arranged at a front pillar 29 closer to the driver's seat 26 (i.e., at the right front pillar on a vehicle with the steering wheel on the right side as in the present embodiment).

The face image camera 28 is for capturing a face image of a driver at the driver's seat 26. For example, the face image camera 28 is configured of a CMOS image sensor or a CCD image sensor. It is preferable that appropriate lighting equipment is arranged for the face image camera 28 so that capturing can be clearly performed with sufficient sensitivity even under a dark environment such as at night. For example, a near-infrared LED or the like may be used as such a lighting equipment so as not to disturb driving for a driver.

The captured face image data of the driver is input to the information input unit 3 of the automatic driving system 1 and is transmitted to the driver's state determining unit 22 of the automatic driving controller 2. The driver's state determining unit 22 determines a degree of arousal of the driver, that is, a degree of sleepiness being whether or not the driver is asleep. The driver's state determining unit 22 extracts, from the face image data, biometric information such as a degree of eye-opening (i.e., eye opening degree), a blinking behavior (e.g., the number of times and a duration of instantaneous opening-closing of eyes), variation of a pupil diameter, eye motion, an eye-closed duration and a ratio thereof, indications regarding driver eye behaviors, a position of the head, and posture and variation thereof.

Body pressure sensors 30a, 31a each being configured of a plurality of pressure-sensitive elements are embedded in the driver's seat 26 at a seat face 30 and a seat back 31. In FIG. 3, a pressure-sensitive element is arranged at each of four diagonal positions of each of the seat face 30 and the seat back 31 as the body pressure sensors 30a, 31a. However, the number and/or location of the pressure-sensitive elements may be variously varied.

The body pressure sensor 30a, 31a detects body pressure data including driver's weight and variation thereof exerted respectively on the seat face 30 and the seat back 31 and inputs the body pressure data to the information input unit 3 of the automatic driving system 1. The information input unit 3 transmits the received body pressure data to the driver's state determining unit 22 of the automatic driving controller 2.

The driver's state determining unit 22 extracts periodical variation of body pressure from the body pressure data and detects the number of breathing of the driver within a specific period of time. Further, the driver's state determining unit 22 extracts body pressure distribution, and a barycentric position and variation thereof at the seat face 30 and the seat back 31 and detect driving posture of the driver and variation thereof.

Using the face image data of the driver obtained from the face image camera 28 and the body pressure data of the driver obtained from the body pressure sensors 30a, 31a at the driver's seat 26, the driver's state determining unit 22 determines an arousal state of the driver, that is, whether the driver is aroused to a degree that manual driving can be performed or is asleep, and a degree of sleepiness. It is not necessary to use the whole biometric information described above. It is simply required to extract items necessary and sufficient for determining the arousal state of the driver. For example, only either the face image data or the body pressure data may be used while eliminating the face image camera 28 or the body pressure sensors 30a, 31a.

Pressure-sensitive sensors 32a, 33a, 34a, 35a are arranged respectively at a brake pedal 32, an acceleration pedal 33, and a steering wheel 34 that are located in front of the driver's seat 26, and at a shift lever 35 located on a passenger's seat side of the driver's seat 26. The pressure-sensitive sensors 32a to 35a are activated by being exerted with predetermined pressure respectively. Specifically, the pressure-sensitive sensors 32a to 35a detect operational state data such as whether or not a driver's foot is placed on the brake pedal 32 or the acceleration pedal 33, whether or not the steering wheel 34 is held by the driver, and whether or not the shift lever 35 is held by the driver. It is preferable that a plurality of the pressure-sensitive sensors 34a are arranged at positions in the circumferential direction of the steering wheel 34 to be capable of detecting that the steering wheel 34 is held by both hands. The operational state data detected by the respective pressure-sensitive sensors 32a to 35a is input to the information input unit 3 of the automatic driving system 1 and transmitted from the information input unit 3 to the driver's state determining unit 22 of the automatic driving controller 2.

The driver's state determining unit 22 determines, from the operational data, whether the driver is in a state of being capable of promptly performing manual driving or whether the driver is ready therefor. For example, in a state that a data signal from the pressure-sensitive sensor 34a is on and the steering wheel 34 is held by the driver, it is determined that the driver is in a state of being capable of performing steering operation. In a state that a data signal from the pressure-sensitive sensor 32a or 33a is on, it is determined that the driver is in a state of being capable of operating the brake pedal 32 or the acceleration pedal 33. In a state that a data signal from the pressure-sensitive sensor 35a is on in addition to the on signal from the steering wheel 34 and the brake pedal 32 or the acceleration pedal 33, it can be determined that the driver is in a state of being capable of promptly performing manual driving.

A head-up display (HUD) device 37 is arranged at the upper section of the dashboard 25 as a first display device 11 to project an image on the front windshield 15. The HUD device 37 may be assembled in the dashboard 25. Alternatively, the HUD device 37 may be arranged on an upper face of the dashboard 25 or at a position of a sun visor 38 at a ceiling of a driver's seat. Further, the HUD device 37 may be arranged so that the projecting can be performed from a plurality of positions of the above and/or others.

In general, HUD devices having a variety of structures are developed and used, such as a type in which a front windshield functions as a screen and a type in which a display image is projected on a transparent screen arranged between a front windshield and eyes of an occupant or arranged on a surface of a front windshield. An HUD device of the present invention may have any structure and any configuration that have been known.

A monitor device 39 as the second display device 12 is integrally assembled in the dashboard 25 (i.e., in-dash) approximately at the front center of the dashboard 25. The monitor device may be attached on the dashboard 25 (i.e., on-dash). Further, it is also possible to cause a rearview mirror 40 attached to an upper center part of the front windshield 15 to function as a third display device of the image display system 5.

Further, data indicating travel behaviors of the vehicle are input respectively from the accelerating system 7, the steering system 8, and the braking system 9 during automatic driving to the information input unit 3 and are transmitted to the travel behavior determining unit 21 of the automatic driving controller 2. Based on the received travel behavior data, the travel behavior determining unit 21 can determine whether the vehicle is accelerating or decelerating, whether the acceleration or deceleration is quick or slow (i.e., degree of acceleration or deceleration), whether steering operation is stable or under operation, and the like. Further, the travel behavior determining unit 21 receives information regarding a travel route set by the automatic driving controller 2 for automatic driving, and travel environments of the own vehicle or traffic situations input through the information input unit 3 from the front camera 16, the rear camera 18, and the radar sensor 20.

Based on the data and information, the travel behavior determining unit 21 determines whether safe driving can be maintained and ensured even when the vehicle during automatic driving is immediately switched to manual driving. For example, if it is suddenly switched to manual driving during steering operation with automatic driving of the vehicle, there arises a fear that strong feeling of tension is created and advanced steering operation is required for the driver. Further, if it is switched to manual driving during acceleration or deceleration with automatic driving, there arises a fear that vehicle speed becomes unstable. Accordingly, in such cases, shifting to manual driving should not be performed until automatic driving becomes into a stable travel state (e.g., a state of travelling approximately at a constant speed approximately linearly or on a gentle curve). Naturally, in a state of emergency such as a case that serious danger is closing, it should be switched to manual driving immediately. Such switching can be performed by overriding by the driver.

Based on the determination results of the travel behavior determining unit 21 and the driver's state determining unit 22, the drive mode switching control unit 23 controls switching from an automatic drive mode to a manual drive mode. Such drive mode switching control is performed while providing the first priority to safe driving. When it is determined that safe driving cannot be ensured, the drive mode switching may be cancelled (automatic driving is maintained) or the vehicle may be stopped safely.

As described above, in automatic driving control of the vehicle, switching from the automatic drive mode to the manual drive mode is performed generally in two cases. The first case is a case of being determined that the automatic drive mode is difficult or inappropriate to be maintained for some reason during automatic driving. Examples of the above include a case that the automatic driving controller 2 determines that travel environments or traffic situations around the own vehicle are not suitable for automatic driving based on the images captured by the front camera 16 or the rear camera 18 or the information input through the information input unit 3 from the radar sensor 20. The second case is a case that the switching is to be performed positively and intentionally by the driver.

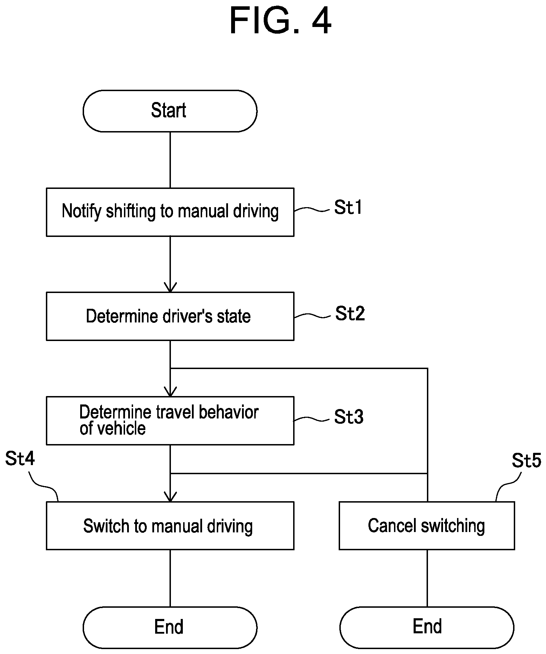

Description will be provided on the first case of the switching control from the automatic drive mode to the manual drive mode according to the automatic driving system 1 of the present embodiment with reference to flowcharts of FIGs. 4 to 6. First, when the automatic driving controller 2 determines that switching from automatic driving to manual driving is necessary, the drive mode switching control unit 23 notifies in advance the driver of releasing of automatic driving and shifting to manual driving (step St1).

Such a notification of drive mode shifting is provided by displaying images of texts, animation and/or the like at the first and/or second display devices 11, 12 using the image display system 5 and concurrently issuing an audio message and/or an alert sound from the respective speakers 13 using the stereo audio system 6. In another embodiment, it is possible to use only one of the image display system 5 and the stereo audio system 6.

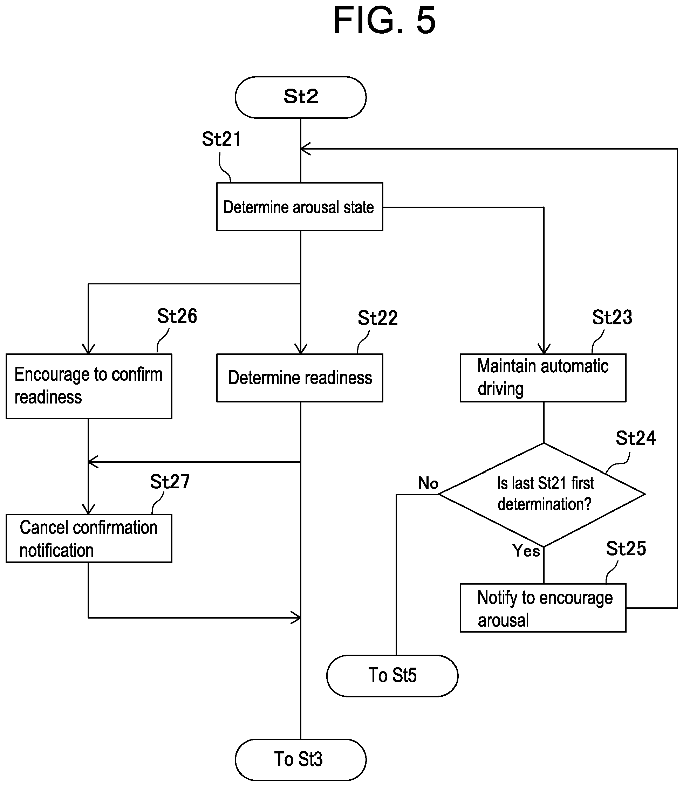

Next, the driver's state determining unit 22 determines the state of the driver as described above (step St2). The determination in step St2 is performed in two stages as illustrated in the flowchart of FIG. 5. First, the driver's state determining unit 22 determines an arousal state of the driver based on the data transmitted from the face image camera 28 and/or the body pressure sensors 30a, 31a at the driver's seat 26 (step St21). If the driver is in an aroused state, readiness of the driver is determined based on the data from the respective pressure-sensitive sensors 32a to 35a (step St22). If the driver is ready for shifting to manual driving, it proceeds to the next step St3 (FIG. 4).

In step St21 of FIG. 5, if the driver is not in the aroused state, the drive mode switching control unit 23 maintains automatic driving (step St23). Next, the drive mode switching control unit 23 determines whether or not the last determination in step St21 is the first determination (step St24). If the determination is a repeated determination, it proceeds to step St5 in FIG. 4 and cancels switching to the manual drive mode.

If the determination is the first determination, the drive mode switching control unit 23 performs a process to encourage arousal of the driver (step St25). The process is performed, for example, by issuing an audio message and/or an alert sound more loudly from the respective speakers 13 using the stereo audio system 6 and/or by displaying with lighting or blinking at the first and second display devices 11, 12 so that the alert image is more striking. Next, it returns to step St21 and the arousal state of the driver is determined again by the drive's state determining unit 22.

In parallel to step St22 in FIG. 5, the drive mode switching control unit 23 perform providing a notification (or alert) to encourage the driver to confirm readiness for shifting to manual driving (step St26). The confirmation notification is provided by displaying images of texts, animation and/or the like at the first and/or second display devices 11, 12 using the image display system 5 and/or issuing an audio message from the respective speakers 13 using the stereo audio system 6.

If the data signal from the pressure-sensitive sensor 34a at the steering wheel 34 and the data signal from the pressure-sensitive sensor 32a or 33a at the brake pedal 32 or the acceleration pedal 33 are on, the driver's state determining unit 22 determines that the driver is ready for manual driving even if the data signal from the pressure-sensitive sensor 35a is not on. When the determination is transmitted from the driver's state determining unit 22, the drive mode switching control unit 23 cancels the confirmation notification provided by the image display system 5 and/or the stereo audio system 6 (step St27).

If the data signal from the pressure-sensitive sensor 34a at the steering wheel 34 or the data signal from the pressure-sensitive sensors 32a, 33a at the brake pedal 32 and the acceleration pedal 33 are off, such information is transmitted from the driver's state determining unit 22 to the drive mode switching control unit 23. In step St26, the drive mode switching control unit 23 provides an alarm to the driver to be ready for operating the steering wheel 34, or the brake pedal 32 and the acceleration pedal 33, data signals of the pressure-sensitive sensors of which are off. Such alarm is provided as described above using the image display system 5 and/or the stereo audio system 6.

In particular, the data signal from the steering wheel 34 is important. This is because steering operation is absolutely necessary for a travelling vehicle to ensure safe travelling. Accordingly, a state that the data signal from the steering wheel 34 is on may be essential as an absolute requirement for determination that the driver is ready for manual driving.

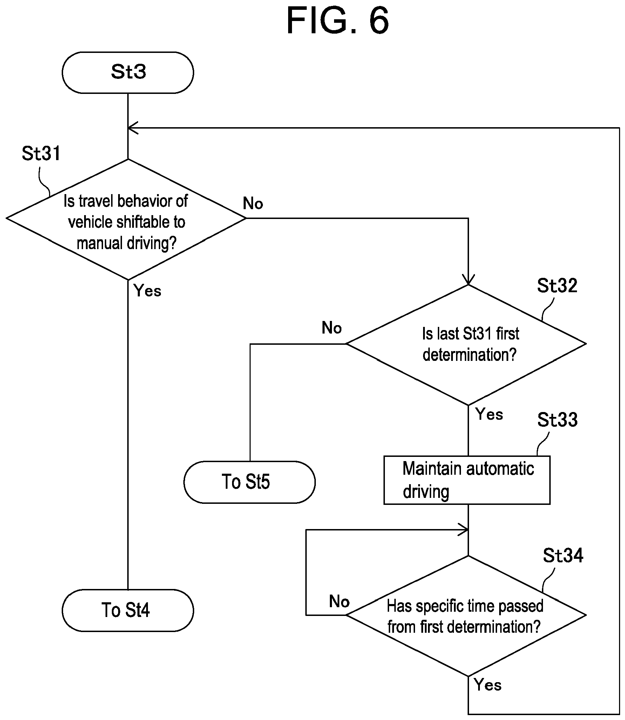

Next, the travel behavior determining unit 21 determines a travel behavior of the vehicle (step St3). As described above, the travel behavior is determined based on whether the vehicle is in a state of being shiftable to manual driving while maintaining safe driving, at the time of travelling with automatic driving, based on a safety degree of steering operation and a state of acceleration and deceleration as well as travel environments of the own vehicle and/or traffic situations (step S31). As illustrated in the flowchart of FIG. 6, if the travel behavior of the vehicle is in a shiftable state to manual driving, the drive mode switching control unit 23 performs switching to the manual drive mode as proceeding to step St4 in FIG. 4.

In step St31, if the travel behavior of the vehicle is determined as not being in the shiftable state to manual driving, the drive mode switching control unit 23 determines whether or not the last determination in step S31 is the first determination (step St32). If the last determination in step S31 is a repeated determination, the drive mode switching control unit 23 cancels switching to the manual drive mode as proceeding to step St5 in FIG. 4.

In step St32, if the last determination in step St31 is the first determination, the drive mode switching control unit 23 maintains automatic driving (step St33) and waits until it turns into a shiftable state to manual driving. Then, after a specific period of time has passed (step St34) from the first determination (step St31), the travel behavior determining unit 21 determines a travel behavior of the vehicle again as returning to step St31.

In step St4, the drive mode switching control unit 23 releases the automatic drive mode with the automatic driving system 1 and performs switching to the manual drive mode. At the same time, the drive mode switching control unit 23 notifies the driver of having shifted to the manual drive mode using the image display system 5 and/or the stereo audio system 6.

On the other hand, in step St5 in which switching to the manual drive mode is cancelled, when the automatic driving controller 2 has determined that automatic driving is possible to be maintained, automatic driving is continuously maintained. In contrast, when the automatic driving controller 2 has determined that automatic driving is difficult to be maintained, the automatic driving controller 2 causes the own vehicle to be stopped at a safe position with automatic driving.

Next, description will be provided on switching control from the automatic drive mode to the manual drive mode due to automatic driving system 1 of the present embodiment. In an embodiment, switching to manual driving based on driver's own intention is performed by the driver operating a button or a switch for manual driving confirmation included in the automatic driving system 1. In another embodiment, switching to manual driving is performed by the driver overriding steering operation, accelerating operation, or a braking operation. However, there may be a case that the driver is not suited for manual driving due to poor health caused by illness, injury, alcohol drinking, depressed consciousness, or the like. Further, there is a fear that the manual confirmation button is operated by mistake or driving operation is overrode, caused by carelessness or incorrect operation of the driver or another occupant, or another incidental reason.

In consideration of the above, even in the case of switching to manual driving based on driver's own intention, it is preferable that switching to manual driving is performed after determining a driver's state and determining a travel behavior of the vehicle by executing necessary steps among the abovementioned steps in relation to FIGs. 4 to 6. In this case, it is possible to skip step St1 of FIG. 4 in which the automatic driving system 1 provides a notification of shifting to manual driving and step St21 of FIG. 5 in which an arousal state of the driver is determined.

Specific description will be provided on an embodiment in which the automatic driving system 1 is provided with the manual driving confirmation button. First, when the manual driving confirmation button is operated, the automatic driving system 1 proceeds to a step (corresponding to step St22 of FIG. 5) in which readiness of the driver is determined with the driver deemed to be in an aroused state. The automatic driving system 1 maintains automatic driving until the readiness of the driver is determined.

Determination of the readiness of the driver is performed by the driver's state determining unit 22 based on data signals from the pressure-sensitive sensors 34a, 32a, 33a, 35a of the steering wheel 34, the brake pedal 32, the acceleration pedal 33, and the transmission lever 35. For example, when the data signal from the steering wheel 34 is on, and concurrently, the data signal from one or more of the brake pedal 32, the acceleration pedal 33, and the transmission lever 35 is on, the driver is determined as being ready for manual driving.

Even if the data signal from the steering wheel 34 is on, when the data signals from the brake pedal 32, the acceleration pedal 33, and the transmission lever 35 are off, the automatic driving system 1 provides an alarm to the driver to be ready for operating the brake pedal 32, the acceleration pedal 33, and the transmission lever 35 using the image display system 5 and/or the stereo audio system 6 as described above. In contrast, when one or more of the data signals from the brake pedal 32, the acceleration pedal 33, and the transmission lever 35 is on while the data signal from the steering wheel 34 is off, the automatic driving system 1 provides an alarm similarly to the driver to be ready for operating the steering wheel 34 using the image display system 5 and/or the stereo audio system 6. As a result of such alarms, when two or more operations including the steering wheel operation are active, the driver is determined as being ready for manual driving.

After readiness of the driver is confirmed, in the automatic driving system 1, the travel behavior determining unit 21 determines a travel behavior of the vehicle. The determination can be performed similarly to step St3 of FIG. 4 and the respective steps of FIG. 6. As a result, if the travel behavior of the vehicle is shiftable to manual driving, the drive mode switching control unit 23 performs switching to the manual drive mode. Switching to the manual drive mode can be notified to the driver by the drive mode switching control unit 23 using the image display system 5 and/or the stereo audio system 6. Since the driver has been deemed to be in an aroused state as described above, the notification is important for causing the driver to recognize switching to manual driving.

Next, specific description is provided on an embodiment in which the automatic driving system 1 does not include the manual driving confirmation button and any of the face image camera 28, the body pressure sensors 30a, 31a, and other sensors for determining the arousal state of the driver. In this embodiment as well, switching from the automatic drive mode to the manual drive mode is performed generally in two cases. One is a case that the automatic driving system 1 determines that maintaining the automatic drive mode is difficult or inadequate for some reason during automatic driving. The other is a case that the switching is to be performed positively and intentionally by the driver.

In the case that the automatic driving system 1 determines that switching to manual driving is necessary, similarly to step St1 of FIG. 4, the drive mode switching control unit 23 notifies in advance the driver of releasing of automatic driving and shifting to manual driving. Such a notification of drive mode shifting is provided by displaying an appropriate message at the first and/or second display devices 11, 12 using the image display system 5 and/or issuing an audio message or an alert sound from the respective speakers 13 using the stereo audio system 6.

The shifting process to manual driving to be performed after the notification to the driver is substantially the same for both the cases of switching by the automatic driving system 1 and positive switching based on driver's intention. In the following, description will be performed commonly as the shifting step for both the cases.

In the present embodiment, the automatic driving system 1 determines the arousal state and readiness of the driver based on data signals from the pressure-sensitive sensors 34a, 32a, 33a, 35a of the steering wheel 34, the brake pedal 32, the acceleration pedal 33, and the transmission lever 35. For example, when data signals from two or more of the steering wheel 34, the brake pedal 32, the acceleration pedal 33, and the transmission lever 35 are concurrently on, it is determined that the driver is deemed to be in an aroused state. The determination is performed by the driver's state determining unit 22 of the automatic driving controller 2.

Next, similarly, based on the data signals from the pressure-sensitive sensors 34a, 32a, 33a, 35a of the steering wheel 34, the brake pedal 32, the acceleration pedal 33, and the transmission lever 35, the automatic driving system 1 determines readiness of the driver. The automatic driving system 1 maintains automatic driving until the arousal state and the readiness of the driver are determined.

In the present embodiment, when the driver is determined as being in an aroused state, it is normally considered that the driver is ready for manual driving. For example, when the data signal from the steering wheel 34 is on, and concurrently, the data signal from one or more of the brake pedal 32, the acceleration pedal 33, and the transmission lever 35 is on, it is possible that the driver is determined as being ready for manual driving. In this case, the arousal state and the readiness of the driver are concurrently determined.

When one or more of the data signals from the brake pedal 32, the acceleration pedal 33, and the transmission lever 35 is on while the data signal from the steering wheel 34 is off, the automatic driving system 1 provides an alarm to the driver to be ready for operating the steering wheel 34 using the image display system 5 and/or the stereo audio system 6. As a result of such alarms, when two or more operations including the steering operation are active, the driver is determined as being ready for manual driving.

As described above, in the present embodiment, detection of steering operation by the driver is basically required for determining readiness for manual driving. This is because steering operation is absolutely necessary for a travelling vehicle to ensure safe travelling. In another embodiment, it is also possible that operational states of the steering wheel 34, the brake pedal 32, the acceleration pedal 33, and the transmission lever 35 are treated as equivalent as the above in determining readiness of the driver for manual driving.

After readiness of the driver is confirmed, in the automatic driving system 1, the travel behavior determining unit 21 determines a travel behavior of the vehicle. The determination can be performed similarly to step St3 of FIG. 4 and the respective steps of FIG. 6. As a result, if the travel behavior of the vehicle is shiftable to manual driving, the drive mode switching control unit 23 performs switching to the manual drive mode. Switching to the manual drive mode is notified to the driver by the drive mode switching control unit 23 using the image display system 5 and/or the stereo audio system 6. Since the driver has been deemed to be in an aroused state as described above, the notification is important for causing the driver to recognize switching to manual driving.

In the abovementioned embodiments, in a case that the drive's state determining unit 22 determines that the arousal state and/or the readiness of the driver are not suitable for manual driving with the methods respectively described in the embodiments, it is also possible to set with the drive mode switching control unit 23 to forcedly return to automatic driving. Examples of the above include a case that the driver does not perform driving operation, that is, steering operation, accelerating operation, or braking operation even after a specific period of time has passed from the switching to manual driving. In this case, when the automatic driving controller 2 determines that automatic driving is difficult to be maintained, it is also possible to cause the vehicle to be stopped at a safe position.

In the above embodiments, description is provided on the automatic driving system 1 whose automatic degree is Level 3 to perform all of accelerating, steering, and braking of an automobile. However, the automatic driving system of the present invention can be similarly applied as well to a system of Level 1 to automatically perform any of accelerating, steering, and braking, a system of Level 2 to automatically perform a plurality of operations among accelerating, steering, and braking, and a system of Level 4 to continue automatic driving even in a case that an occupant does not respond to a drive mode switching request from the system.

### EXPLANATION OF REFERENCES

- 1: Automatic driving system
- 2: Automatic driving controller
- 3: Information input unit
- 4: Automatic driving information storing unit
- 5: Image display system
- 6: Stereo audio system
- 7: Accelerating system
- 8: Steering system
- 9: Braking system
- 10: Indicating system
- 11: First display device
- 12: Second display device
- 13: Speaker
- 14: Automobile
- 15: Front windshield
- 21: Drive behavior determining unit
- 22: Driver's state determining unit
- 23: Drive mode switching control unit
- 25: Dashboard
- 26: Driver's seat
- 28: Face image camera
- 30: Seat face
- 31: Seat back
- 30a, 31a: Body pressure sensor
- 32: Brake pedal
- 33: Acceleration pedal
- 34: Steering wheel
- 35: Transmission lever
- 32a∼35a: Pressure-sensitive sensor
- 37: Head-up display device
- 39: Monitor device

## Claims

1. An automatic driving system (1) for vehicles capable of switching between an automatic drive mode in which an own vehicle is caused to travel with automatic driving in accordance with a scheduled travel behavior along a scheduled travel route set in advance and a manual drive mode in which a driver performs driving manually, comprising:
a driver's state determining unit (22) configured to determine whether or not a state of the driver is a state of being capable of performing manual driving;
a travel behavior determining unit (21) configured to determine whether or not a travel behavior of the own vehicle during automatic driving is in a stable state of being switchable to manual driving; and
a drive mode switching control unit (23) configured to control switching from the automatic drive mode during automatic driving to the manual drive mode,
**characterized in that**
the driver's state determining unit (22) determines the state of the driver based on an arousal state of the driver and readiness for manual driving of the driver,
the travel behavior determining unit (21) determines the travel behavior of the own vehicle based on an operational state of a steering system (8), an accelerating system (7), and/or a braking system (9) of the own vehicle during automatic driving,
the drive mode switching control unit (23) allows switching from the automatic drive mode to the manual drive mode when the driver's state determining unit (22) determines that the state of the driver is in a state of being capable of performing manual driving and the travel behavior determining unit (21) determines that the travel behavior of the own vehicle is in a stable state of being switchable to manual driving, and
the drive mode switching control unit (23) provides a notification to encourage the driver to confirm readiness using a display device (11, 12) and/or a speaker (13) of the own vehicle when the driver's state determining unit (22) determines that the driver is in the arousal state but is not ready for manual driving, and then, the driver's state determining unit (22) determines readiness of the driver again.

2. The automatic driving system (1) for vehicles according to claim 1, further comprising
an information input unit (3) configured to obtain information of a position, a route, and a travel state of another vehicle through vehicle-to-vehicle communication with the other vehicle and road-to-vehicle communication with an antenna or a communication chip on a road,
wherein the drive mode switching control unit (23) determines whether the travel behavior of the own vehicle is switchable to manual driving while the information obtained by the information input unit (3) through communication is took into account as well.

3. The automatic driving system for vehicles (1) according to claim 1 or claim 2, wherein the drive mode switching control unit (23) maintains the automatic drive mode from starting of the determining by the driver's state determining unit (22) or the travel behavior determining unit (21) until switching to the manual drive mode is allowed.

4. The automatic driving system for vehicles (1) according to any one of claims 1 to 3, wherein the driver's state determining unit (22) determines the arousal state of the driver based on biometric information of the driver.

5. The automatic driving system for vehicles (1) according to any one of claims 1 to 4, wherein the drive mode switching control unit (23) cancels switching from the automatic drive mode to the manual drive mode after a specific period of time has passed from starting of the determining by the travel behavior determining unit.

6. The automatic driving system for vehicles (1) according to any one of claims 1 to 5, wherein the driver's state determining unit (22) determines that the driver is ready for manual driving when detecting that the driver is in a state of being capable of performing operation of a steering wheel, an accelerator, or a brake of the own vehicle based on input signals from pressure-sensitive sensors (32a-35a) arranged at the steering wheel, the accelerator, and the brake.

7. An automatic driving method for vehicles with an automatic driving system for vehicles capable of switching between an automatic drive mode in which an own vehicle is caused to travel with automatic driving in accordance with a scheduled travel behavior along a scheduled travel route set in advance and a manual drive mode in which a driver performs driving manually, comprising:
determining whether or not a state of the driver is a state of being capable of performing manual driving based on an arousal state of the driver and readiness for manual driving of the driver (St2);
determining whether or not a travel behavior of the own vehicle during automatic driving is in a stable state of being switchable to manual driving based on an operational state of a steering system, an accelerating system, and/or a braking system of the own vehicle (St3); and
switching to the manual drive mode as releasing the automatic drive mode when the determined state of the driver is in a state of being capable of performing manual driving and the determined travel behavior of the own vehicle is in a stable state of being switchable to manual driving (St4),
**characterized by** further comprising
providing a notification to encourage the driver to confirm readiness using a display device and/or a speaker of the own vehicle (St26), when in said determining (St2) whether or not a state of the driver is a state of being capable of performing manual driving, the state of the driver is determined as being capable of performing manual driving, but the driver is determined as not being ready for manual driving.

8. The automatic driving method for vehicles according to claim 7, wherein the automatic drive mode is maintained from starting of the determining (St2) of the state of the driver or the determining (St3) of the travel behavior of the own vehicle until completion of the switching (St4) to the manual drive mode.

9. The automatic driving method for vehicles according to any one of claims 7 or 8, further comprising obtaining biometric information of the driver (St21),
wherein the arousal state of the driver is determined based on the biometric information of the driver.

10. The automatic driving method for vehicles according to any one of claims 7 to 9, further comprising measuring elapsed time (St34) from starting of the determining (St3) of the travel behavior of the own vehicle,
wherein switching from the automatic drive mode to the manual drive mode is cancelled when the elapsed time exceeds a specific time period.

11. The automatic driving method for vehicles according to any one of claims 7 to 10, wherein, in the determining (St2) of the state of the driver, it is determined that the driver is ready for manual driving when the driver is in state of being capable of performing operation of a steering wheel, an accelerator, or a brake.

## Patentansprüche

1. Automatisches Antriebssystem (1) für Fahrzeuge, das in der Lage ist, zwischen einem automatischen Antriebsmodus, in dem das eigene Fahrzeug dazu gebracht wird, automatisch gemäß einem planmäßigen Fahrverhalten entlang einer im Voraus festgelegten planmäßigen Reiseroute zu fahren, und einem manuellen Fahrmodus, in dem ein Fahrer das Fahren manuell durchführt, umzuschalten, umfassend:
eine Fahrverhalten-Bestimmungseinheit (22), die dazu konfiguriert ist, zu bestimmen, ob ein Zustand des Fahrers ein Zustand ist, in dem er in der Lage ist, manuelles Fahren durchzuführen oder nicht;
eine Fahrverhalten-Bestimmungseinheit (21), die dazu konfiguriert ist, zu bestimmen, ob das Fahrverhalten des eigenen Fahrzeugs während des automatischen Fahrens in einem stabilen Zustand der Umschaltbarkeit auf manuelles Fahren vorliegt oder nicht; und
eine Antriebsmodus-Schaltsteuereinheit (23), die dazu konfiguriert ist, das Umschalten aus dem automatischen Antriebsmodus während des automatischen Fahrens in den manuellen Antriebsmodus zu steuern,
**dadurch gekennzeichnet, dass**
die Fahrerzustand-Bestimmungseinheit (22) den Zustand des Fahrers auf Basis eines Aufmerksamkeitszustands des Fahrers und der Bereitschaft des Fahrers zum manuellen Fahren feststellt,
wobei die Fahrverhalten-Bestimmungseinheit (21) das Fahrverhalten des eigenen Fahrzeugs auf Basis eines Betriebszustands eines Lenksystems (8), eines Beschleunigungssystems (7), und/oder eines Bremssystems (9) des eigenen Fahrzeugs während des automatischen Fahrens bestimmt,
die Antriebsmodus-Schaltsteuereinheit (23) das Umschalten aus dem automatischen Fahrmodus auf den manuellen Fahrmodus ermöglicht, wenn die Fahrerzustand-Bestimmungseinheit (22) feststellt, dass der Zustand des Fahrers in einem Zustand vorliegt, in dem er in der Lage ist, manuelles Fahren durchzuführen, und die Fahrerverhalten-Bestimmungseinheit (21) feststellt, dass das Fahrverhalten des eigenen Fahrzeugs in einem stabilen Zustand der Umschaltbarkeit auf manuelles Fahren vorliegt, und
die Antriebsmodus-Umschaltsteuereinheit (23) eine Benachrichtigung bereitstellt, um den Fahrer dazu zu animieren, die Bereitschaft unter Verwendung einer Anzeigevorrichtung (11, 12) und/oder eines Lautsprechers (13) des eigenen Fahrzeugs zu bestätigen, wenn die Fahrerzustand-Bestimmungseinheit (22) feststellt, dass sich der Fahrer im Aufmerksamkeitszustand befindet, aber nicht zum manuellen Fahren bereit ist, und dann die den Fahrerzustand-Bestimmungseinheit (22) erneut die Bereitschaft des Fahrers feststellt.

2. Automatisches Antriebssystem (1) für Fahrzeuge nach Anspruch 1, ferner umfassend
eine Informationseingabeeinheit (3), die dazu konfiguriert ist, Informationen über eine Position, eine Route und einen Fahrzustand eines anderen Fahrzeugs durch Fahrzeug-zu-Fahrzeug-Kommunikation mit dem anderen Fahrzeug und Straße-zu-Fahrzeug-Kommunikation über eine Antenne oder einen Kommunikationschip auf einer Straße zu erhalten,
wobei die Antriebsmodus-Schaltsteuereinheit (23) bestimmt, ob das Fahrverhalten des eigenen Fahrzeugs auf manuelles Fahren umschaltbar ist, während die von der Informationseingabeeinheit (3) durch Kommunikation erhaltenen Informationen ebenfalls berücksichtigt werden.

3. Automatisches Antriebssystem für Fahrzeuge (1) nach Anspruch 1 oder Anspruch 2, wobei die Antriebsmodus-Umschaltsteuereinheit (23) den automatischen Antriebsmodus vom Beginn der Bestimmung durch die Fahrerzustand-Bestimmungseinheit (22) oder die Fahrverhalten-Bestimmungseinheit (21) beibehält, bis Umschalten auf den manuellen Fahrmodus erlaubt ist.

4. Automatisches Antriebssystem für Fahrzeuge (1) nach einem der Ansprüche 1 bis 3, wobei die Fahrerzustand-Bestimmungseinheit (22) den Aufmerksamkeitszustand des Fahrers auf Basis biometrischer Informationen des Fahrers feststellt.

5. Automatisches Antriebssystem für Fahrzeuge (1) nach einem der Ansprüche 1 bis 4, wobei die Antriebsmodus-Schaltsteuereinheit (23) das Umschalten aus dem automatischen Fahrmodus auf den manuellen Fahrmodus aufhebt, nachdem eine bestimmte Zeitspanne seit dem Beginn der Bestimmung durch die Fahrverhalten-Bestimmungseinheit verstrichen ist.

6. Automatisches Antriebssystem für Fahrzeuge (1) nach einem der Ansprüche 1 bis 5, wobei die Fahrerzustand-Bestimmungseinheit (22) bestimmt, dass der Fahrer zum manuellen Fahren bereit ist, wenn sie auf Basis von Eingangssignalen von druckempfindlichen Sensoren (32a-35a), die am Lenkrad, am Gaspedal und an der Bremse angeordnet sind, feststellt, dass sich der Fahrer in einem Zustand befindet, in dem er in der Lage ist, die Betätigung eines Lenkrads, eines Gaspedals oder einer Bremse des eigenen Fahrzeugs durchzuführen.

7. Automatisches Antriebsverfahren für Fahrzeuge mit einem automatischen Antriebssystem für Fahrzeuge, das in der Lage ist, zwischen einem automatischen Fahrmodus, in dem das eigene Fahrzeug dazu gebracht wird, mit automatischem Antrieb in Übereinstimmung mit einem planmäßigen Fahrverhalten entlang einer im Voraus festgelegten planmäßigen Fahrstrecke zu fahren, und einem manuellen Fahrmodus, in dem ein Fahrer den Fahrbetrieb manuell durchführt, umzuschalten, umfassend:
Feststellen, ob der Zustand des Fahrers ein Zustand ist oder nicht, in dem er in der Lage ist, manuelles Fahren durchzuführen, auf Basis eines Aufmerksamkeitszustands des Fahrers und der Bereitschaft des Fahrers zum manuellen Fahren (St2);
Bestimmen, ob das Fahrverhalten des eigenen Fahrzeugs während des automatischen Fahrens in einem stabilen Zustand der Umschaltbarkeit auf manuelles Fahren vorliegt oder nicht, auf Basis eines Betriebszustands eines Lenksystems, eines Beschleunigungssystems und/oder eines Bremssystems des eigenen Fahrzeugs (St3); und
Umschalten auf den manuellen Fahrmodus durch Beenden des automatischen Antriebsmodus, wenn der festgestellte Zustand des Fahrers ein Zustand ist, in dem er in der Lage ist, manuelles Fahren durchzuführen, und das festgestellte Fahrverhalten des eigenen Fahrzeugs in einem stabilen Zustand der Umschaltbarkeit auf manuellen Antrieb vorliegt, (St4),
**dadurch gekennzeichnet, dass** es ferner umfasst
Bereitstellen einer Benachrichtigung, um den Fahrer zu animieren, die Bereitschaft unter Verwendung eines Anzeigegeräts und/oder eines Lautsprechers des eigenen Fahrzeugs zu bestätigen (St26), wenn bei der Bestimmung (St2), ob ein Zustand des Fahrers ein Zustand ist, in dem er in der Lage ist, manuelles Fahren durchzuführen, oder nicht, der Zustand des Fahrers so festgestellt wird, dass er in der Lage ist, manuelles Fahren durchzuführen, aber festgestellt wird, dass der Fahrer nicht zum manuellen Antrieb bereit ist.

8. Automatisches Antriebsverfahren für Fahrzeuge nach Anspruch 7, wobei der automatische Antriebsmodus vom Beginn der Bestimmung (St2) des Zustands des Fahrers oder der Bestimmung (St3) des Fahrverhaltens des eigenen Fahrzeugs bis zum Abschluss des Umschaltens (St4) in den manuellen Fahrmodus aufrechterhalten wird.

9. Automatisches Antriebsverfahren für Fahrzeuge nach einem der Ansprüche 7 oder 8, ferner umfassend die Erfassung biometrischer Informationen des Fahrers (St21),
wobei der Aufmerksamkeitszustand des Fahrers auf Basis der biometrischen Informationen des Fahrers festgestellt wird.

10. Automatisches Antriebsverfahren für Fahrzeuge nach einem der Ansprüche 7 bis 9, ferner umfassend das Messen der verstrichenen Zeit (St34) ab Beginn der Bestimmung (St3) des Fahrverhaltens des eigenen Fahrzeugs,
wobei das Umschalten aus dem automatischen Fahrmodus auf den manuellen Antriebsmodus aufgehoben wird, wenn die verstrichene Zeit eine bestimmte Zeitspanne überschreitet.

11. Automatisches Antriebsverfahren für Fahrzeuge nach einem der Ansprüche 7 bis 10, wobei bei der Bestimmung (St2) des Zustands des Fahrers festgestellt wird, dass der Fahrer zum manuellen Fahren bereit ist, wenn der Fahrer sich in einem Zustand befindet, in dem er in der Lage ist, die Betätigung eines Lenkrads, eines Gaspedals oder einer Bremse durchzuführen.

## Revendications

1. Système de conduite automatique (1) pour véhicules capable de commuter entre un mode de conduite automatique selon lequel un propre véhicule est amené à rouler en conduite automatique conformément à un comportement de déplacement programmé suivant un itinéraire programmé défini à l'avance et un mode de conduite manuelle selon lequel un conducteur effectue une conduite manuelle, comprenant :
une unité de détermination de l'état du conducteur (22) conçue pour déterminer si un état du conducteur est ou non un état de capacité à effectuer une conduite manuelle ;
une unité de détermination du comportement de déplacement (21) conçue pour déterminer si un comportement de déplacement du propre véhicule pendant la conduite automatique est ou non dans un état stable permettant de commuter en conduite manuelle ; et
une unité de commande de commutation de mode de conduite (23) conçue pour commander la commutation du mode de conduite automatique durant la conduite automatique en mode de conduite manuelle,
**caractérisé en ce que**
l'unité de détermination de l'état du conducteur (22) détermine l'état du conducteur basé sur un état d'éveil du conducteur et la disponibilité à une conduite manuelle du conducteur,
l'unité de détermination du comportement de déplacement (21) détermine le comportement de déplacement du propre véhicule basé sur un état opérationnel d'un système de direction (8), d'un système d'accélération (7) et/ou d'un système de freinage (9) du propre véhicule durant la conduite automatique,
l'unité de commande de commutation de mode de conduite (23) permet la commutation du mode de conduite automatique en mode de conduite manuelle lorsque l'unité de détermination de l'état du conducteur (22) détermine que l'état du conducteur est dans un état de capacité à effectuer une conduite manuelle et l'unité de détermination du comportement de déplacement (21) détermine que le comportement de déplacement du propre véhicule est dans un état stable permettant de commuter en conduite manuelle, et
l'unité de commande de commutation de mode de conduite (23) fournit une notification pour encourager le conducteur à confirmer la disponibilité en utilisant un dispositif d'affichage (11, 12) et/ou un haut-parleur (13) du propre véhicule lorsque l'unité de détermination de l'état du conducteur (22) détermine que le conducteur est dans l'état d'éveil mais n'est pas prêt pour une conduite manuelle, et ensuite l'unité de détermination de l'état du conducteur (22) détermine à nouveau la disponibilité du conducteur.

2. Système de conduite automatique (1) pour véhicules selon la revendication 1, comprenant en outre
une unité d'entrée d'informations (3) conçue pour obtenir des informations d'une position, d'un itinéraire et d'un état de déplacement d'un autre véhicule par communication de véhicule à véhicule avec l'autre véhicule et communication de route à véhicule avec une antenne ou une puce de communication sur une route,
en ce que l'unité de commande de commutation de mode de conduite (23) détermine si le comportement de déplacement du propre véhicule est commutable en conduite manuelle pendant que les informations obtenues par l'unité d'entrée d'informations (3) par le biais de la communication sont également prises en compte.

3. Système de conduite automatique (1) pour véhicules selon la revendication 1 ou 2, en ce que l'unité de commande de commutation de mode de conduite (23) maintient le mode de conduite automatique depuis le début de la détermination par l'unité de détermination de l'état du conducteur (22) ou par l'unité de détermination du comportement de déplacement (21) jusqu'à ce que la commutation en mode de conduite manuelle soit autorisée.

4. Système de conduite automatique (1) pour véhicules selon l'une des revendications 1 à 3, en ce que l'unité de détermination de l'état du conducteur (22) détermine l'état d'éveil du conducteur basé sur des informations biométriques du conducteur.

5. Système de conduite automatique (1) pour véhicules selon l'une des revendications 1 à 4, en ce que l'unité de commande de commutation de mode de conduite (23) annule la commutation du mode de conduite automatique en mode de conduite manuelle après écoulement d'une période de temps spécifique depuis le début de la détermination par l'unité de détermination de comportement de déplacement.

6. Système de conduite automatique (1) pour véhicules selon l'une des revendications 1 à 5, en ce que l'unité de détermination de l'état du conducteur (22) détermine que le conducteur est prêt pour la conduite manuelle lorsqu'elle détecte que le conducteur est en état d'actionner un volant, un accélérateur ou un frein du propre véhicule sur la base de signaux d'entrée provenant de capteurs sensibles à la pression (32a-35a) disposés au niveau du volant, de l'accélérateur et du frein.

7. Procédé de conduite automatique pour véhicules comportant un système de conduite automatique pour véhicules capable de commuter entre un mode de conduite automatique selon lequel un propre véhicule est amené à rouler en conduite automatique conformément à un comportement de déplacement programmé suivant un itinéraire programmé défini à l'avance et un mode de conduite manuelle selon lequel un conducteur effectue une conduite manuelle, comprenant :
la détermination si un état du conducteur est ou non un état de capacité à effectuer une conduite manuelle basée sur un état d'éveil du conducteur et de disponibilité à une conduite manuelle du conducteur (St2) ;
la détermination si un comportement de déplacement du propre véhicule en conduite automatique est ou non dans un état stable de commutation en mode de conduite manuelle sur la base d'un état opérationnel d'un système de direction, d'un système d'accélération et/ou d'un système de freinage du propre véhicule (St3) ; et
la commutation en mode de conduite manuelle comme désactivation du mode de conduite automatique lorsque l'état déterminé du conducteur est dans un état lui permettant d'effectuer une conduite manuelle et le comportement de déplacement déterminé du propre véhicule est dans un état stable de commutation en conduite manuelle (St4),
**caractérisé en ce qu'**il comprend en outre
la fourniture d'une notification pour encourager le conducteur à confirmer la disponibilité en utilisant un dispositif d'affichage et/ou un haut-parleur du propre véhicule (St26) lorsque dans ladite détermination (St2) si un état du conducteur est ou non un état de capacité à effectuer une conduite manuelle, l'état du conducteur est déterminé comme étant capable d'effectuer une conduite manuelle, mais le conducteur est déterminé comme n'étant pas prêt pour une conduite manuelle.

8. Procédé de conduite automatique pour véhicules selon la revendication 7, en ce que le mode de conduite automatique est maintenu depuis le début de la détermination (St2) de l'état du conducteur ou la détermination (St3) du comportement de déplacement du propre véhicule jusqu'à établissement de la commutation (St4) en mode de conduite manuelle.

9. Procédé de conduite automatique pour véhicules selon l'une des revendications 7 ou 8, comprenant en outre l'obtention d'informations biométriques du conducteur (St21), en ce que l'état d'éveil du conducteur est déterminé sur la base des informations biométriques du conducteur.

10. Procédé de conduite automatique pour véhicules selon l'une des revendications 7 à 9, comprenant en outre la mesure du temps écoulé (St34) depuis le début de la détermination (St3) du comportement de déplacement du propre véhicule,
en ce que la commutation du mode de conduite automatique en mode de conduite manuelle est annulée lorsque le temps écoulé dépasse une période de temps spécifique.

11. Procédé de conduite automatique pour véhicules selon l'une des revendications 7 à 10, en ce que, dans la détermination (St2) de l'état du conducteur, il est déterminé que le conducteur est prêt pour une conduite manuelle lorsque le conducteur est dans un état lui permettant d'actionner un volant, un accélérateur ou un frein.
